# EUROPÄISCHE PATENTSCHRIFT

(11) **EP 3 715 986 B1**
(45) Veröffentlichungstag und Bekanntmachung des Hinweises auf die Patenterteilung: **29.06.2022**
(21) Anmeldenummer: 19166203.0
(22) Anmeldetag: 29.03.2019
(51) Int. Cl.: H04L 41/0893, G05B 19/418

(54) **VERFAHREN ZUR AUTOMATISCHEN KONFIGURATION EINES AUTOMATISIERUNGSGERÄTES, AUTOMATISIERUNGSGERÄT, NETZWERK, COMPUTERPROGRAMM UND COMPUTERLESBARES MEDIUM**
METHOD FOR AUTOMATIC CONFIGURATION OF AN AUTOMATION DEVICE, AUTOMATION DEVICE, NETWORK, COMPUTER PROGRAM AND COMPUTER READABLE MEDIUM
PROCÉDÉ DE CONFIGURATION AUTOMATIQUE D'UN APPAREIL D'AUTOMATISATION, APPAREIL D'AUTOMATISATION, RÉSEAU, PROGRAMME INFORMATIQUE ET SUPPORT LISIBLE PAR ORDINATEUR

(43) Veröffentlichungstag der Anmeldung: 30.09.2020
(73) Patentinhaber: Siemens Aktiengesellschaft, 80333 München (DE)
(72) Erfinder: Albrecht, Harald, 90475 Nürnberg (DE); Höme, Stephan, 91126 Schwabach (DE); Talanis, Thomas, 91336 Heroldsbach (DE)

(56) Entgegenhaltungen:
- EP-A1- 2 629 164
- EP-A1- 2 996 311
- DE-A1-102007 025 892

## Beschreibung

Die Erfindung betrifft ein Verfahren zur automatischen Konfiguration eines insbesondere industriellen Automatisierungsgerätes. Darüber hinaus betrifft die Erfindung ein Automatisierungsgerät, ein Netzwerk, ein Computerprogramm und ein computerlesbares Medium.

Im Bereich von Netzwerken, insbesondere industriellen Netzwerken, kommt den Namen der Netzwerkteilnehmer zunehmend eine zentrale Rolle in der Identifikation von Geräten sowie der Identifikation von Funktionen und dergleichen zu. Der Industrial-Ethernet-Standard für die Automatisierung - PROFINET - benutzt seit Anbeginn solche Namen zur führenden Identifikation insbesondere von IO-Geräten (IO-Devices), und nicht etwa IP-Adressen.

Vor allem in demjenigen Fall, dass ein einen Netzwerkteilnehmer darstellendes Gerät ausgetauscht wird, ist es, wenn Namen anstelle von IP-Adressen zur Identifikation herangezogen werden, besonders wichtig, dass das noch leere Austauschgerät möglichst schnell seinen korrekten, eindeutigen Namen erhält. Dieser Prozess wird insbesondere im Umfeld von PROFINET auch als "taufen" bezeichnet. Im Falle eines Gerätetauschs ist also eine rasche "Wiedertaufe" wünschenswert bzw. erforderlich.

Eine Möglichkeit, Geräte zu "taufen" besteht in einer sogenannten "topologischen" Taufe, die vom Prinzip her auf der Netzwerk-Verkabelung der Geräte untereinander basiert.

In PROFINET ist eine (quasi-)zentralisierte Form einer topologischen Taufe umgesetzt. Dabei wird im Zuge der Planung einer Automatisierungsapplikation mit einem Engineering-Werkzeug auch die Netzwerk-Verschaltung der Automatisierungsgeräte erfasst. Aus dieser Verschaltung der Geräte in Verbindung mit den Gerätenamen berechnet das Planungswerkzeug eine Liste sogenannter Alias-Namen. Dabei besitzt ein bestimmtes Gerät maximal so viele Alias-Namen, wie es Ethernet-Ports hat. Ein Alias-Name besteht aus einem Portnamen, an den der Gerätename des Nachbarn angefügt wird. Für einen Port mit dem Portnamen "port001" und einen Gerätename "io-2.hall1.acme.com" beispielsweise würde sich dann "port001" plus "io-2.hall1.acme.com" als Alias-Name für das an den Port "port001" angeschlossene Gerät "io-3.hall1.acme.com" ergeben.

Die einzelnen Geräte erfahren, sobald sie in ein Netzwerk eingebracht worden sind, die Namen ihrer Nachbarn über das Link Layer Discovery Protocol (LLDP), das insbesondere in IEEE 802.1AB definiert ist. Gemäß der vorgenannten Regel "Port-Name plus Name des Nachbargerätes" kann sich dann jedes noch ungetaufte Gerät seine Alias-Namen berechnen. Die einzelnen Geräte kennen dabei nicht die Alias-Namen-Liste. Diese ist nur dem zentralen Planungstool bekannt, welches diese berechnet hat.

Das Planungstool muss die Alias-Namen-Liste in einen PROFINET IO-Controller (IOC) laden. Auf Basis der geladenen Liste versucht der IO-Controller dann ständig, noch ungetaufte Geräte anhand ihrer Alias-Namen aufzufinden. Wird eines oder werden mehrere noch ungetaufte Geräte anhand der Alias-Namen gefunden, werden diese mit dem Namen getauft, der zuvor im Planungswerkzeug dem jeweiligen Alias-Namen zugewiesen wurde. Im Kontext vom IPv4 werden zudem oftmals weiterhin diverse IPv4-Parameter zugewiesen, beispielsweise IPv4-Adresse, Netzmaske, Default Gateway und dergleichen mehr.

Die in PROFINET vorgesehene topologische Taufe benötigt immer einen (quasi-)zentralen IO-Controller, der das Aufspüren ungetaufter Geräte durchführt und diese dann tauft.

In der Automatisierungstechnik können Automatisierungsgeräte mit Hilfe des PROFINET "Name of Station" (NoS) funktional benannt werden, beispielsweise mit einem AKZ- oder KKZ-Namen (AKZ steht dabei für Anlagenkennzeichnungssystem, siehe beispielswiese DIN6779, und KKZ für Kraftwerk-Kennzeichensystem, siehe beispielsweise VGB-105, VGB-B 106, IEC/DIN EN 61346 bzw. ISO 16952). Industrielle Anwender sind in ihren Arbeitsprozessen darauf eingestellt, Automatisierungsgeräte dergestalt "zu taufen". Speziell für den Gerätetausch existieren Verfahren, um den Name of Station automatisch dem Ersatzgerät nach dessen Anschluss an das Netzwerk ohne weiteren manuellen Eingriff zuzuweisen. Bei der "PROFINET topologische Taufe" sind PROFINET Controller (insbesondere speicherprogrammierbare Steuerungen, SPS) in der Pflicht, den ihnen zugeordneten Automatisierungsgeräten die richtigen Namen zu geben.

Aus WO 2020/035308 A1 geht ferner ein Verfahren zur dezentralen Selbsttaufe unter Zuhilfenahme des Domain Name Systems (DNS, siehe insbesondere RFC 1034 und 1035) hervor.

DE 10 2007 025892 A1 ein Verfahren zum Inbetriebnehmen einer Automatisierungsstation an der Automatisierungsvorrichtung einer Industrieanwendung, bei dem die Automatisierungsstation eine Anzahl von Profinet-kompatiblen Geräten umfasst. Den Geräten wird zur Identifizierung jeweils ein eindeutiger symbolischer Name im Vorfeld vorgegeben. Dabei wird eine Identifizierung der zum Betreiben an die Automatisierungsvorrichtung angeschalteten Automatisierungsstation anhand der symbolischen Namen der Profinet-kompatiblen Geräte durchgeführt. Die Ansteuerung der Profinet-kompatiblen Geräte erfolgt durch die Automatisierungsvorrichtung nach Anschalten der Automatisierungsstation in funktioneller Abhängigkeit der identifizierten Automatisierungsstation.

In EP 2 996 311 A1 ist beschrieben, dass zur Bereitstellung von Informationen über Kommunikationsgerätenamen innerhalb eines industriellen Automatisierungssystems bei einer Zuweisung bzw. Änderung eines Gerätenamens eines Kommunikationsgeräts ein Datagramm mit einer Aktualisierungsanforderung zur Zuordnung seiner Kommunikationsnetzadresse zum geänderten oder zugewiesenen Gerätenamen insbesondere an ausgewählte Kommunikationsgeräte verbreitet wird. Die ausgewählten Kommunikationsgeräte erzeugen oder ändern auf die Aktualisierungsanforderung jeweils einen dem Kommunikationsgerät mit dem geänderten oder zugewiesenen Gerätenamen zugeordneten Datensatz in ihrer jeweiligen Datenbank. Dabei umfasst der Datensatz die Zuordnung der Kommunikationsnetzadresse zum Gerätenamen.

Aus EP 2 629 164 B1 ist ein Verfahren zur Zuweisung jeweils eines Stationsnamens zu einer Anzahl Komponenten einer industriellen Automatisierungsanordnung bekannt, wobei diesen projektierten Komponenten in einem Projekt jeweils ein Stationsname und eine Anzahl projektierter Eigenschaften zugeordnet werden. Dabei werden während einer Inbetriebnahmephase oder zur Laufzeit der Automatisierungsanordnung durch die Konfigurierungskomponente folgende Verfahrensschritte durchgeführt: in einem ersten Schritt werden die Komponenten in dem Datennetz ermittelt, in einem zweiten Schritt werden Informationen über jeweilige tatsächliche Eigenschaften der ermittelten Komponenten von diesen abgerufen, in einem dritten Schritt wird für jede ermittelte Komponente ein jeweiliger Ähnlichkeitswert in Bezug auf die projektierten Komponenten anhand des Grades der Übereinstimmung der tatsächlichen Eigenschaften mit den projektierten Eigenschaften bestimmt, und in einem vierten Schritt wird den ermittelten Komponenten jeweils der projektierte Stationsname derjenigen projektierten Komponente zugewiesen, zu der der beste Ähnlichkeitswert besteht. Durch eine solches Verfahren und eine solche Konfigurierungskomponente kann der Vorgang des Zuweisens von Stationsnamen teilweise oder vollständig automatisiert werden, auch wenn die projektierten und die ermittelten Komponenten in ihren Eigenschaften teilweise voneinander abweichen.

Im generellen IT-Bereich, insbesondere im Büro-Umfeld, wird oftmals das Dynamic Host Configuration Protocol (DHCP) (siehe Request for Comments (RFC) 2131 "Dynamic Host Configuration Protocol" sowie RFC 3315 "Dynamic Host Configuration Protocol for IPv6 (DHCPv6)" der Internet Engineering Task Force (IETF)) eingesetzt. Dieses ermöglicht es ebenfalls, einem Gerät einen "Host-Namen" (Gerätenamen) zuzuweisen. Dabei wird jedoch teilweise als nachteilig erachtet, dass DHCP die Hardware-Netzwerk-Adresse (MAC) eines Gerätes als eindeutigen Schlüssel benutzt. Wird ein Gerät ausgetauscht, ändert sich auch die MAC-Adresse, so dass eine automatische Taufe große administrative Aufwände verursachen würde.

Im Bereich der allgemeinen IT hat sich ferner die so genannte Container-Technologie bewährt. Anwendungs-Container stellen in der Regel "abgekapselte" Einheiten dar, die unabhängig voneinander ausgeführt werden können, egal wo sie sich befinden. Ähnlich wie bei virtuellen Maschinen sind Container eine Art Behälter für Anwendungen, in denen diese laufen können. Während virtuelle Maschinen jedoch eine ganze Computerumgebung abbilden, enthalten die Container üblicherweise lediglich die wichtigen Daten, die für die Ausführung der jeweiligen Anwendung bzw. Anwendungen benötigt werden.

Die Container-Technologien bzw. Containerisierung ermöglichen es insbesondere, eine Software bzw. Anwendung in einem Container zu verpacken, der alles umfasst, was sie zum Laufen braucht, beispielsweise Programmcode, Laufzeit, System-Tools und/oder Systembibliotheken. Die Container-Technologien bzw. Containerisierung erlauben es, Funktionen einfach und bequem modular zu verpacken, zu transportieren und schließlich in den operativen Bereich auszurollen. Klassische Einsatzgebiete von Containern liegen beispielsweise darin Applikationen, etwa eine Datenbank oder einen Web-Front-End, bequem zu verpacken.

Beispiele für Software für die Container-Virtualisierung/Containerisierung sind etwa "Docker" oder "rkt" (gesprochen "rocket", siehe etwa https://coreos.com/rkt/sowie https://www.docker.com bzw. EP 3 267 351 A1 zu Docker). Ein Beispiel für ein Orchestrierungssystem bzw. eine Orchestrierungs-Software für Container ist durch "Kubernetes" gegeben (siehe etwa https://kubernetes.io/)

Eine wichtige Innovation der klassischen Rechenzentrums-IT (data center IT) ist eine effektive und effiziente Orchestrierung von Software-Containern in Clustern: hierbei sorgt eine Orchestrierungssoftware, wie beispielsweise Googles Kubernetes dafür, die Arbeitslast in Form von Software-Containern auf die verfügbaren Arbeitsknoten zu verteilen. Weiterhin wird auch die Container- und Knotenverfügbarkeit überprüft und beispielsweise gestörte Container werden automatisch neu gestartet.

Die Knoten eines Rechenzentrums-Clusters sind dabei weitestgehend austauschbare Arbeiter. Für die Verteilung der Arbeit spielt die (Geräte-)Identität eines einzelnen Arbeiters/Knotens zumeist keine Rolle. Im Zusammenhang damit, dass Knoten (Arbeiter) austausch- und ersetzbar sind, wird auch der Ausdruck "cattle, not pets" verwendet (siehe beispielsweise http://cloudscaling.com/blog/cloud-computing/the-history-ofpets-vs-cattle/).

Im Gegensatz zu (entfernt von einer industriellen Anlage angesiedelten) Rechenzentrums-Clustern befinden sich Industrial Edge-Geräte gemäß der Definition von "Edge" (siehe beispielsweise https://de.wikipedia.org/wiki/Edge_Computing) als Gegenstück der Cloud in einer Anlage nahe an den (klassischen) Automatisierungsgeräten insbesondere "am Rand" einer Anlage bzw. eines Netzwerkes einer solchen.

Bestimmte Arbeitslasten (Container) können bei automatisierungstechnischen Aufgaben nicht mehr unbedingt frei im Cluster beliebigen Arbeitsrechnern zugewiesen werden. Vielmehr müssen die Arbeitslasten bestimmter Anlagen-spezifischer Funktionen eben den zugehörigen Anlagen und beispielsweise zu diesen gehörigen Edge-Geräten zugewiesen werden können.

Einerseits arbeiten Anwender industrieller Automatisierungstechnik bereits seit Jahrzehnten mit Anlagenkennzeichnungssystemen (AKZ, KKZ, ...) und sind damit darin geübt, Funktionen eindeutig zu kennzeichnen. Andererseits können Anwender bei Kubernetes beispielsweise Knoten (Arbeiter) und Arbeitslasten (Container) mit sogenannten "Labeln" versehen, die eine selektive Zuordnung von Arbeitslasten zu Arbeitern ermöglichen würde. Das Kubernetes-Orchestrierungssystem beispielsweise erlaubt es, dass Cluster-Nodes, die beispielsweise durch Edge-Geräte gegeben sein können, mit "Labeln" versehen werden können. Auf die Label kann dann gezielt beim Zuordnen von funktionsspezifischen Arbeitslasten gefiltert werden, um eine bestimmte Container-Funktion nur einem einzelnen oder auch einem Satz von Nodes/Edges zuzuweisen. Das Zuweisen solcher Label an Nodes/Edges liegt dabei rein im Ausführungsbereich des Anwenders.

Bei der zu erwartenden großen Anzahl von Automatisierungsgeräten, beispielsweise Edge-Geräten in industriellen Anlagen wird ein manuelles "Labeln" rasch unwirtschaftlich und fehleranfällig, wenn viele automatisierungstechnische Funktionen vielen Edge-Geräten zuzuweisen sind. Zudem würden Anwender tatsächlich ein doppeltes Labeln erfahren: erst aus Sicht der Automatisierungstechnik, danach aus Sicht der Orchestrierung.

Neben dem Vermeiden doppelter Arbeit sollten Mechanismen zur automatischen (Selbst-)Taufe nach einem Gerätetausch auch für die Orchestrierung greifen können, um einen raschen und problemlosen Tausch einer defekten Industrial Edge Hardware zu gewährleisten, beispielsweise die dezentrale Selbsttaufe gemäß WO 2020/035308 A1.

Ausgehend davon ist es eine Aufgabe der vorliegenden Erfindung, eine Möglichkeit zu schaffen, Knoten eines Clusters bildenden Automatisierungsgeräten mit geringem Aufwand konkrete Aufgabe zuzuordnen, insbesondere auch für den Fall eines Gerätetausches.

Diese Aufgabe wird gelöst durch ein Verfahren zur automatischen Konfiguration eines insbesondere industriellen Automatisierungsgerätes, umfassend die Schritte
a) ein Automatisierungsgerät, welches geeignet ist, als Knoten eines Clusters zu fungieren und wenigstens eine Automatisierungsaufgabe auszuführen, wird bereitgestellt,
b) eine Geräte-Management-Einheit überwacht, ob dem Automatisierungsgerät ein Automatisierungs-Kenner zugeordnet wird,
c) wenn die Geräte-Management-Einheit eine solche Zuordnung erkannt hat, fragt sie bei einer zentralen Cluster-Management-Einheit an, ob in einer zu dem Cluster gehörigen Cluster-Zustands-Datenbank mit Beschreibungsobjekten für Knoten des Clusters bereits ein Beschreibungsobjekt existiert, in dem der dem Automatisierungsgerät zugeordnete Automatisierungs-Kenner hinterlegt ist,
d) in dem Fall, dass ein solches Beschreibungsobjekt bereits für einen dem Automatisierungsgerät zugeordneten Knoten-Kenner existiert, wird dieses Beschreibungsobjekt als Beschreibungsobjekt des Automatisierungsgerätes erachtet, und in dem Fall, dass ein solches Beschreibungsobjekt für einen anderen als den dem Automatisierungsgerät zugeordneten Knoten-Kenner existiert und als inaktiv deklariert ist und in dem Fall, dass noch kein solches Beschreibungsobjekt existiert erzeugt die Geräte-Management-Einheit in der Cluster-Zustands-Datenbank für den dem Automatisierungsgerät zugeordneten Knoten-Kenner ein Beschreibungsobjekt, in dem der dem Automatisierungsgerät zugeordnete Automatisierungs-Kenner hinterlegt ist, oder hinterlegt den dem Automatisierungsgerät zugeordneten Automatisierungs-Kenner in einem in der Cluster-Zustands-Datenbank bereits für einen dem Automatisierungsgerät zugeordneten Knoten-Kenner existierenden Beschreibungsobjekt oder veranlasst die Hinterlegung oder die Erzeugung.

Aus einem "alten" Beschreibungsobjekt mit dem zugeordneten Automatisierungs-Kenner, das als "inaktiv" deklariert ist, wird der Automatisierungs-Kenner bevorzugt entfernt oder das gesamte "inaktive" Beschreibungsobjekt wird entfernt. So kann die Datenbank aktuell gehalten werden.

Für den Fall, dass bereits ein als "aktiv" deklariertes solches Beschreibungsobjekt in der Datenbank existiert, unterbleibt die Hinterlegung des Automatisierungs-Kenners bzw. die Erzeugung eines neuen Beschreibungsobjektes mit diesem zweckmäßiger Weise. In zweckmäßiger Ausgestaltung des erfindungsgemäßen Verfahrens ist entsprechend vorgesehen, dass für den Fall, dass die Anfrage, ob in der zu dem Cluster gehörigen Cluster-Zustands-Datenbank bereits ein Beschreibungsobjekt existiert, in dem der dem Automatisierungsgerät zugeordnete Automatisierungs-Kenner hinterlegt ist, ergibt, dass dem so ist und dieses Beschreibungsobjekt als aktiv deklariert ist, die Geräte-Management-Einheit kein Beschreibungsobjekt, in dem der dem Automatisierungsgerät zugeordnete Automatisierungs-Kenner hinterlegt ist, in der Cluster-Zustands-Datenbank für einen dem Automatisierungsgerät zugeordneten Knoten-Kenner erzeugt, und den dem Automatisierungsgerät zugeordneten Automatisierungs-Kenner auch nicht in einem in der Cluster-Zustands-Datenbank bereits für einen dem Automatisierungsgerät zugeordneten Knoten-Kenner existierenden Beschreibungsobjekt hinterlegt und die Hinterlegung oder die Erzeugung auch nicht veranlasst. So kann insbesondere eine "Gerä-te-Dublette" erkannt und eine "Doppelnutzung" eines Automatisierungs-Kenners verhindert und damit verbundene Probleme vermieden werden.

Im Anschluss an die Schritte a) bis d) des erfindungsgemäßen Verfahrens können gängige Orchestrierungsmechanismen, die dem Automatisierungsgerät insbesondere von einem Anwender spezifisch per Automatisierungs-Kenner zugeordnete Arbeitslasten konkret diesem Gerät zugewiesen werden. Darauf ggf. zweckmäßiger Weise erfolgende Download- und Deployment-Prozesse können auf die vorbekannte Weise, insbesondere wie in den bekannten Container-Systemen, beispielsweise Docker definiert, ablaufen. Beispielsweise weist das Orchestrierungssystem das Container-System auf einem Arbeitsknoten an, ein ganz bestimmtes Container-Abbild ("container image") von einer vorab konfigurierten Registratur (registry) zu laden und anschließend zur Ausführung zu bringen.

In Weiterbildung ist entsprechend vorgesehen, dass dem Automatisierungsgerät unter Rückgriff auf das Beschreibungsobjekt, das in Schritt d) als das Beschreibungsobjekt des Automatisierungsgerätes erachtet wurde oder das in Schritt d) erzeugt wurde oder in dem in Schritt d) der Automatisierungs-Kenner hinterlegt wurde, wenigstens eine Automatisierungs-funktion zugeordnet wird. Besonders bevorzugt wird dem Automatisierungsgerät unter Rückgriff auf das Beschreibungsobjekt wenigstens eine containerisierte Automatisierungsfunktion zugeordnet.

Im Ergebnis wird insbesondere von den Beschreibungsobjekten, die die Automatisierungs-Kenner umfassen, die automatisierungstechnische Besonderheit abgebildet, dass Automatisierungsgeräte etwa in einem Produktionsnetz nicht immer beliebig untereinander austauschbare Geräte darstellen, sondern diese (auch) automatisierungs-, etwa produktionsspezifische Aufgaben erfüllen müssen, die durch andere Automatisierungsgeräte und/oder an anderer Stelle nicht erbracht werden können. Dabei wird dies zuverlässig gewährleistet, ohne dass es eines manuellen Eingriffes, etwa eines manuellen Labelns bzw. einer manuellen Konfiguration durch einen Benutzer bedarf.

Durch die erfindungsgemäße Verwendung von Automatisierungs-Kennern in den Beschreibungsobjekten wird ein besonders einfaches Zuordnen von gerätespezifischen bzw. "ortsabhängigen" Automatisierungs-, etwa Produktionsfunktionen zu dem jeweiligen Automatisierungsgerät anhand etablierter Kennzeichnungssystem aus dem Bereich der industriellen Automatisierung, wie AKZ, KKZ, ... möglich.

Der Automatisierungs-Kenner und der Knoten-Kenner eines Gerätes sind zweckmäßiger Weise voneinander verschiedene, also nicht identische Kenner.

Bei dem Automatisierungs-Kenner handelt es sich bevorzugt um einen Kenner, welcher dem Automatisierungsgerät im Zusammenhang mit einer automatisierungstechnischen Aufgabe gegeben wird bzw. wurde.

Bei dem Knoten-Kenner handelt es sich bevorzugt um einen Kenner, welcher dem Automatisierungsgerät im Zusammenhang mit seiner Aufgabe bzw. Funktion als Knoten eines Clusters gegeben wird bzw. wurde.

Bei den Beschreibungsobjekten für die Knoten in der Cluster-Zustands-Datenbank handelt es sich insbesondere um Objekte, welche die gewünschten und/oder aktuellen Zustände der Knoten im Cluster beschreiben. In der Regel wird für jeden Knoten ein solches Beschreibungsobjekt in einer Datenbank geführt, welches den gewünschten und/oder aktuellen Zustand des jeweiligen Knotens beschreibt. Ein Beschreibungsobjekt für einen Knoten kann auch als Knoten-Objekt bezeichnet werden. Im Rahmen von Kubernetes beispielsweise sind die Beschreibungsobjekte auch als "ressource-objects" oder einfach "objects" bezeichnet.

Das erfindungsgemäße Verfahren ist insbesondere geeignet zu gewährleisten, dass ausgetauschten sowie neu hinzugekommenen Automatisierungsgeräten, die als Cluster-Knoten dienen, automatisch spezifische Aufgaben im Cluster-Verbund bzw. -System zugeordnet werden. Zugehörige Beschreibungsobjekte in einer Cluster-Zustands-Datenbank und die Kenner werden automatisch erzeugt bzw. gepflegt.

Für ein neu hinzugekommen Gerät wird, wenn diesem einen Automatisierungs-Kenner zugeordnet wurde, der Automatisierungs-Kenner erstmalig in einem Beschreibungsobjekt in der Cluster-Zustands-Datenbank hinterlegt.

Insbesondere für ein Austausch-Gerät kann über die Überprüfung gemäß Schritt c) ermittelt werden, ob das zum "alten", defekten Gerät gehörige Beschreibungsobjekt bereits als "inaktiv" deklariert wurde. Ist dies der Fall, kann der Automatisierungs-Kenner insbesondere als Label in einem (neuen) Beschreibungsobjekt für das (neue) Gerät hinterlegt werden.

Die Überprüfung, ob bereits ein Beschreibungsobjekt existiert, in dem der dem Automatisierungsgerät zugeordnete Automatisierungs-Kenner hinterlegt ist, kann ergeben, dass ein solches Objekt bereits für den dem Gerät zugeordneten Knoten-Kenner, etwa eine Knoten-ID des Gerätes existiert. Mit anderen Worten existiert ein Objekt, welches für das Gerät benötigt wird, bereits. In diesem Falle muss kein neues Objekt mit dem Automatisierungs-Kenner für den bzw. unter dem Knoten-Kenner erzeugt werden, sondern das bereits in der erforderlichen Form existierende Objekt kann für das Gerät verwendet werden. In diesem Fall wird daher das Beschreibungsobjekt als Beschreibungsobjekt des Automatisierungsgerätes erachtet. Das Beschreibungsobjekt sollte zweckmäßiger Weise als aktiv deklariert sein.

Mit dem erfindungsgemäßen Verfahren wird darüber hinaus auch der Fall abgedeckt, dass sich der Automatisierungs-Kenner eines Gerätes, insbesondere Bestandsgerätes, ändert, also einem Gerät ein neuer, von einem vorherigen Automatisierungs-Kenner verschiedener Automatisierungs-Kenner zugeordnet wird. Auch dies wird von der Geräte-Management-Einheit erkannt und es wird eine entsprechende Aktualisierung angestoßen, dies unter Berücksichtigung der Möglichkeit, dass der neue Automatisierungs-Kenner bereits vergeben wurde, also ein als aktiv deklariertes Beschreibungsobjekt mit diesem existiert.

Für den Fall, dass das Automatisierungsgerät bereits (wenigstens einmal) ein Automatisierungs-Kenner zugeordnet wurde (vorheriger Kenner) und dann ein weiterer Automatisierungs-Kenner zugeordnet wird, kann vorgesehen sein, dass die Geräte-Management-Einheit, nachdem sie die Zuordnung des weiteren Automatisierungs-Kenners erkannt hat, die zentrale Cluster-Management-Einheit kontaktiert und veranlasst, dass das (vorherige) Beschreibungsobjekt, in dem der vorherige Automatisierungs-Kenner hinterlegt ist, gelöscht wird. So kann die Datenbank "Aufgeräumt" bzw. aktuell gehalten werden.

Bei dem Automatisierungsgerät handelt es sich in besonders bevorzugter Ausführungsform um ein Edge Gerät. Dann wird durch das erfindungsgemäße Verfahren insbesondere eine besonders komfortable Erstinbetriebnahme und ein besonders komfortabler Austausch von Industrial-Edge-Geräten unterstützt. Eine manuelle Konfiguration/Datenbankpflege kann entfallen.

Die Geräte-Management-Einheit befindet sich bevorzugt auf dem Automatisierungsgerät.

Bei der zentralen Cluster-Management-Einheit, bei der in Schritt c) angefragt wird, handelt es sich bevorzugt um eine solche, die für das Verteilen von Arbeitslasten auf die Knoten des Clusters zuständig ist. Man kann auch von einer Cluster-Orchestrierungs-Einheit bzw. einer Cluster-Orchestrierungs-Software sprechen. Rein beispielhaft für eine solche Orchestrierungs-Software sei Kubernetes genannt.

Die Geräte-Management-Einheit kann die zentrale Cluster-Management-Einheit dafür nutzen, das Beschreibungsobjekt zu erzeugen bzw. den Automatisierung-Kenner in einem solchen zu hinterlegen. Die Geräte-Management-Einheit kann beispielsweise der zentralen Cluster-Management-Einheit den Automatisierungs-Kenner übergeben und diese dazu veranlassen, diesen in einem existierenden Beschreibungsobjekt zu hinterlegen bzw. ein neues Beschreibungsobjekt mit diesem zu erzeugen.

Die Information darüber, ob ein Beschreibungsobjekt aktiv oder inaktiv ist, kann prinzipiell aus dem Clustersystem selber kommen, etwa direkt von der zentralen Cluster-Management-Einheit, oder auch von einem anderen Überwachungssystem, welches insbesondere eine unabhängige Überwachung des Clusters durchführt.

Bei dem zu konfigurierenden Automatisierungsgerät handelt es sich insbesondere um ein Neugerät oder ein Austauschgerät oder ein Bestandsgerät, dessen Automatisierungs-Kenner sich geändert hat. Eine Änderung eines Automatisierungs-Kenners kann beispielsweise erforderlich sein, wen ein Automatisierungs-Kenner falsch eingegeben wurde, dieser beispielsweise einen "Buchstabendreher" enthält, und daher zu korrigieren ist. Auch kann es sein, dass ein Automatisierungsgerät funktional umgewidmet wird, beispielsweise, weil sich herausstellt, dass es keine ausreichende Leistung besitzt, ohne, dass es aus dem Orchestrierungssystem ausgebucht wird.

Ein Kenner kann auch als Marke bezeichnet werden. Entsprechend können die Automatisierungs- und die Knoten-Kenner auch als Automatisierungs- bzw. die Cluster-Marken bezeichnet werden.

Die Zuordnung des Automatisierungs-Kenners kann im Rahmen einer Taufe des Gerätes erfolgen bzw. eine solche darstellen.

Die Zuordnung eines Kenners zu einem Gerät kann einschließen, dass dem Gerät ein Kenner zugewiesen wird und/oder von dem Gerät ein Kenner empfangen wird und/oder auf dem Gerät ein Kenner gespeichert wird.

Ein Gerät, dem (noch) kein Kenner zugeordnet ist, kann sich durch eine auf dem Gerät gespeicherte, noch leere Kenner-, insbesondere Namensdatei bzw. einen auf dem Gerät gespeicherten, noch leeren Kenner-, insbesondere Namens-String auszeichnen. In einem Zustand ohne Kenner befindet sich ein Gerät beispielsweise, bevor es das erste Mal in einem Netzwerk in Betrieb genommen wurde, etwa im Auslieferungszustand.

Es sei betont, dass die Reihenfolge der Zuordnung von einem Knoten- und einem Automatisierungs-Kenner zu einem Gerät beliebig sei kann. Mit anderen Worten kann beispielsweise erst der Automatisierungs- und dann der Knoten-Kenner zugeordnet werden. Auch ist es möglich, dass die beiden Kenner in dazu umgekehrter Reihenfolge oder auch gleichzeitig zugeordnet werden.

Ein anderer Begriff für einen Cluster ist Computercluster oder Rechnerverbund. Die Knoten eines Clusters, die etwa durch mehrere insbesondere verbundene Recheneinrichtungen/Rechner gegeben sind, werden auch als Nodes bezeichnet. Ein Automatisierungsgerät, das dazu ausgebildet und/oder eingerichtet ist, als Knoten eines Clusters betrieben zu werden und wenigstens eine Automatisierungsaufgabe auszuführen, kann beispielsweise durch eine Recheneinrichtung oder einen Rechner, etwa in Form eines Industrie-PCs gegeben sein, die wenigstens eine Automatisierungsaufgabe zu übernehmen hat.

Eine weitere Ausführungsform des erfindungsgemäßen Verfahrens zeichnet sich dadurch, dass die Geräte-Management-Einheit lokal einen dem Automatisierungsgerät zugeordneten Knoten-Kenner ermittelt.

Alternativ oder zusätzlich kann vorgesehen sein, dass die Geräte-Management-Einheit in Schritt d) das für den dem Automatisierungsgerät zugeordneten Knoten-Kenner bereits existierende Beschreibungsobjekt oder das zu erzeugende Beschreibungsobjekt oder das existierende Beschreibungsobjekt, in dem der Automatisierungs-Kenner zu hinterlegen ist, über einen dem Automatisierungsgerät zugeordneten Knoten-Kenner adressiert. So kann auf besonders geeignete Weise auf ein bzw. das Beschreibungsobjekt, das die gewünschten und aktuellen Zustände eines Automatisierungsgerätes im Cluster beschreibt, zugegriffen werden.

Eine weitere besonders bevorzugte Ausführungsform zeichnet sich dadurch aus, dass der Automatisierungs-Kenner in dem Beschreibungsobjekt in Form eines oder als Bestandteil eines Labels hinterlegt wird. So können aus dem Stand der Technik an sich vorbekannte Mechanismen, insbesondere die vorbekannte Nutzung von Labeln, weiter zum Einsatz kommen.

Bei einem Knoten-Kenner, der dem Gerät zugewiesen wird, handelt es sich bevorzugt um eine Label, insbesondere ein solches, das von einem zentralen Cluster-Management-System bzw. der zentralen Cluster-Management-Einheit an die beteiligten Knoten des Clusters zu deren Identifikation vergeben wird.

Label, die durch einen Automatisierungs-bzw. Knoten-Kenner gegeben sein oder einen solchen umfassen können, haben bevorzugt die Form Schlüssel=Wert, wobei der Schlüssel beispielsweise die Struktur "siemens.edge/name" haben und der Wert der (alte oder neue) Automatisierungs-Kenners, etwa FQDN sein kann.

Weiterhin kann vorgesehen sein, dass dem Automatisierungsgerät der Automatisierungs-Kenner von einem weiteren Automatisierungsgerät, insbesondere einer Steuerung zugeordnet wird.

Alternativ oder zusätzlich kann vorsehen sein, dass dem Automatisierungsgerät der Automatisierungs-Kenner über ein Selbsttaufe-Verfahren zugeordnet wird, besonders bevorzugt über das in WO 2020/035308 A1 beschriebene Verfahren zur dezentralen Selbsttaufe unter Zuhilfenahme des Domain Name Systems (DNS, siehe insbesondere RFC 1034 und 1035). Das Automatisierungsgerät kann in vorteilhafter Weiterbildung eine Selbsttaufe-Einheit umfassen, welches zur Abwicklung der die Selbsttaufe, insbesondere gemäß der europäischen Patentanmeldung Nr. 18188735.7 ausgebildet und/oder eingerichtet ist.

Ferner kann vorgesehen sein, dass dem Automatisierungsgerät der Automatisierungs-Kenner über ein Einrichtungs-Werkzeug zugeordnet wird. Als Beispiel für ein solches Einrichtungs-Werkzeug sei das PROFINET-Primary-Setup-Tool genannt.

Was die Form des Automatisierungs-Kenners angeht, haben sich PQDNs bzw. FQDNs als besonders geeignet erweisen. Entsprechend kann in Weiterbildung vorgesehen sein, dass dem Automatisierungsgerät ein teilweise oder vollständig qualifizierter Domain Name (Partially oder Fully Qualified Domain Name, PQDN oder FQDN) als Automatisierungs-Kenner zugeordnet wird. Ein nur teilweise qualifizierter Domain Name (PQDN) umfasst im Gegensatz zu einem FQDN nicht den vollen Pfad von Domain Labein bis zur DNS-Wurzel. Der Automatisierungs-Kenner, insbesondere -Name ist bevorzugt ein (global) eindeutiger Kenner, insbesondere Name. Es kann sich um einen voll qualifizierten Domain Namen im Sinne von dem RFC 7719 (Request for Comments: 7719 der Internet Engineering Task Force Group (IETF), https://tools.ietf.org/html/rfc7719) handeln.

Auch ist es möglich, dass ein Automatisierungs-Kenner einen Name of Station (NoS) umfasst oder durch einen solche gebildet wird. NoS werden beispielswiese im Rahmen von PROFINET, etwa über ein Primary Setup Tool oder eine topologische Taufe, als Gerätenamen vergeben.

Alternativ oder zusätzlich kann dem Automatisierungsgerät ein Knoten-Kenner von der zentralen Cluster-Management-Einheit zugeordnet werden. Dies entspricht der konventionellen Vorgehensweise.

Es kann beispielsweise sein, dass das Automatisierungsgerät in Schritt a) als Neugerät bereitgestellt wird, und das Automatisierungsgerät im Rahmen eines Onboarding-Prozesses, insbesondere von der zentralen Cluster-Management-Einheit, in den Cluster aufgenommen wird, und dem Automatisierungsgerät ein Knoten-Kenner im Rahmen des Onboarding-Prozesse oder im Anschluss an diesen der Knoten-Kenner zugewiesen wird.

Dem Automatisierungsgerät kann beispielsweise eine Knoten-ID als Knoten-Kenner zugordnet werden.

Weiterhin kann vorgesehen sein, dass das Automatisierungsgerät im Rahmen seiner Bereitstellung in Schritt a) an ein insbesondere industrielles Automatisierungsnetzwerk angeschlossen wird. Mehrere Knoten eines Clusters sind bzw. werden in der Regel über ein Netzwerk verbunden.

Gegenstand der Erfindung ist auch ein Automatisierungsgerät, welches geeignet ist, als Knoten eines Clusters zu fungieren und wenigstens eine Automatisierungsaufgabe auszuführen und das zur Durchführung des erfindungsgemäßen Verfahrens ausgebildet und/oder eingerichtet ist.

Bei einem erfindungsgemäßen Automatisierungsgerät und/oder einem Automatisierungsgerät, welches unter Durchführung des erfindungsgemäßen Verfahrens konfiguriert wird, kann es sich beispielsweise um ein (separates) Gerät bzw. eine (separate) Hardware-Komponente handeln, welche ausgebildet und/oder eingerichtet ist, wenigstens eine Automatisierungsfunktion zu erfüllen. Selbstverständlich ist es auch möglich, dass ein Automatisierungsgerät als "Software-Automatisierungsgerät" vorliegt, etwa in Form einer virtuellen Maschine (VM) oder eines Computerprogrammes bzw. einer Computerprogramm-Sammlung, die auf einer zu dessen/deren Ausführung ausgebildeten Einrichtung, etwa einem PC oder einer anderen Recheneinrichtung oder einem beliebigen anderen Gerät, abgelegt ist. Ein erfindungsgemäßes bzw. zu konfigurierendes Automatisierungsgerät kann auch in ein anderes Gerät integriert sein, dies sowohl in Form von Hardware- als auch Software.

Unter den Begriff Automatisierungsgerät im Sinne der vorliegenden Anmeldung fallen sämtliche der vorgenannten Möglichkeiten, insbesondere auch "Soft-Geräte" sowie Geräte, die eigentlich andere Funktionen ausführen bzw. einem anderen Zweck dienen, aber auch eine Automatisierungs-Funktion übernehmen und als Cluster-Knoten fungieren können. Zum Beispiel ist auch ein konventioneller Rechner bzw. PC oder Industrie-Rechner bzw. -PC, welcher u.a. wenigstens eine Automatisierungs-, beispielsweise Steuerfunktion ausführt bzw. übernimmt, und als Knoten eines Clusters dienen kann bzw. dient, ein Automatisierungsgerät im Sinne der vorliegenden Erfindung.

Das erfindungsgemäße Automatisierungsgerät umfasst bevorzugt eine Geräte-Management-Einheit, die dazu ausgebildet und/oder eingerichtet ist, zu überwachen, ob dem Gerät ein Automatisierungs-Kenner zugeordnet wird, und für den Fall, dass die Zuordnung eines solche erkannt wird, bei einer zentralen Cluster-Management-Einheit anzufragen, ob in einer zu dem Cluster, an welchem das Gerät als Knoten teilnimmt bzw. teilnehmen soll gehörigen Cluster-Zustands-Datenbank mit Beschreibungsobjekten für Knoten des Clusters bereits ein den in Schritt c) zugeordneten Automatisierungs-Kenner umfassendes Beschreibungsobjekt existiert, gegebenenfalls für einen anderen als einen dem Gerät zugeordneten Knoten-Kenner, und in dem Fall, dass noch kein solches Beschreibungsobjekt existiert oder in dem Fall, dass ein solches Beschreibungsobjekt existiert, dieses jedoch als inaktiv deklariert ist, ein den Automatisierungs-Kenner umfassendes Beschreibungsobjekt für einen dem Automatisierungsgerät zugeordneten Knoten-Kenner in der Cluster-Zustands-Datenbank zu erzeugen oder den Automatisierungs-Kenner in einem in der Datenbank bereits für einen dem Gerät zugeordneten Knoten-Kenner existierenden Beschreibungsobjekt zu hinterlegen.

Die Geräte-Management-Einheit kann eine funktionale Einheit darstellen, die beispielsweise durch eine Software-Komponente auf geeigneter Hardware implementiert sein kann. Das gleiche gilt für die zentrale Cluster-Management-Einheit, die ebenfalls eine funktionale Einheit gegeben sein kann, die etwa durch eine Software (beispielsweise Kubernetes) gegeben ist, die insbesondere auf einer zentralen Hardware läuft, auf die die Knoten zugreifen können.

Eine weitere Ausführungsform des erfindungsgemäßen Automatisierungsgerätes zeichnet sich dadurch aus, dass das Automatisierungsgerät dazu ausgebildet und/oder eingerichtet ist, unter Rückgriff auf ein in einer zu dem Cluster, an welchem das Gerät als Knoten teilnimmt bzw. teilnehmen soll gehörigen Cluster-Zustands-Datenbank hinterlegten Beschreibungsobjektes wenigstens eine insbesondere containerisierte Automatisierungsfunktion zugeordnet zu bekommen.

In weiterer vorteilhafter Ausgestaltung weist das erfindungsgemäße Automatisierungsgerät eine Selbsttaufe-Einheit auf, die dazu ausgebildet und/oder eingerichtet ist, eine Selbsttaufe bzw. ein Selbsttaufe-Verfahren abzuwickeln, insbesondere das in WO 2020/035308 A1 beschriebene Verfahren zur dezentralen Selbsttaufe unter Zuhilfenahme des Domain Name Systems (DNS, siehe insbesondere RFC 1034 und 1035).

Die Erfindung betrifft ferner ein Netzwerk mit wenigstens einem erfindungsgemäßen Automatisierungsgerät.

Ein weiterer Gegenstand der vorliegenden Erfindung ist ein Computerprogramm, das Programmcodemittel zur Durchführung der Schritte des erfindungsgemäßen Verfahrens umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist
- FIG 1: eine rein schematische Teildarstellung eines industriellen Automatisierungsnetzwerkes mit mehreren, jeweils einen Cluster-Knoten bildenden erfindungsgemäßen Automatisierungsgeräten; und
- FIG 2: eines der Automatisierungsgeräte aus FIG 1 und die zentrale Cluster-Management-Einheit.

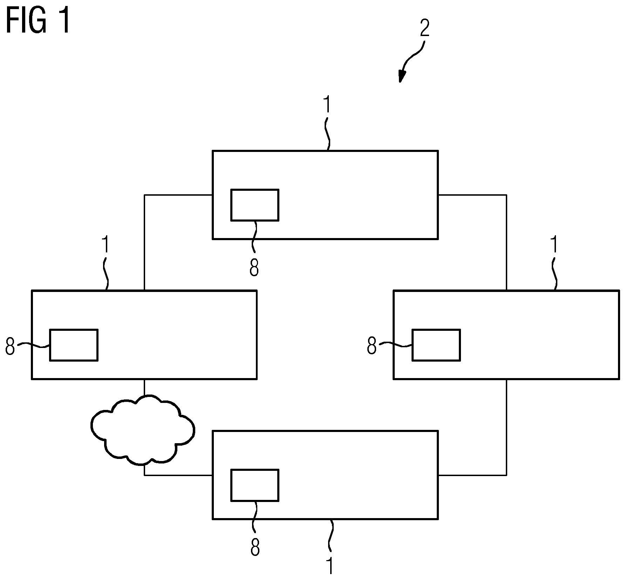

Die FIG 1 zeigt eine stark vereinfachte, rein schematische Teildarstellung ein industrielles Automatisierungsnetzwerkes. Konkret sind von dem Automatisierungsnetzwerk vier Automatisierungsgeräte 1 in Form von Industrie-PCs gegeben, die jeweils wenigstens eine Automatisierungsfunktion bzw. Automatisierungsaufgabe, konkret für einen in den Figuren nicht weiter dargestellten industriellen technischen Prozess, vorliegend einen Produktionsprozess, übernehmen. Die vier Geräte 1 bilden allesamt Bestandteile einer Automatisierungsanlage, die in aus dem Stand der Technik hinlänglich vorbekannter Weise diverse weitere Komponenten, u.a. konventionelle Automatisierungsgeräte, wie speicherprogrammierbare Steuerungen, IO-Geräte und dergleichen, umfasst, die in der FIG 1 nicht weiter dargestellt sind. Die Wolke deutet an, dass die Geräte 1 verbunden sind, beispielsweise über Ethernet (gemäß IEEE 802.3). Jedes der vier Geräte 1 stellt ferner ein Edge-Gerät dar, das aus Sicht eines Cluster-Orchestrierungssystems als Arbeitsknoten erscheint, dem Arbeitsaufgaben (in Form von Containern) zugewiesen werden können.

Jedes der vier Geräte 1 fungiert als Knoten eines Clusters 2 und übernimmt bestimmte Arbeitslasten des Clusters 2 in Form von (Software-)Containern. Die Arbeitslasten in Form von (Software-)Containern schließen die jeweilige wenigstens eine Automatisierungsfunktion bzw. Automatisierungsaufgabe mit ein. Dabei gilt, dass die Arbeitslasten bestimmter Anlagen-spezifischer Funktionen bestimmten, zugehörigen Anlagenteilen zugeordnet sind, zu denen jeweils ein bestimmtes Industrial-Edge-Gerät 1 gehört.

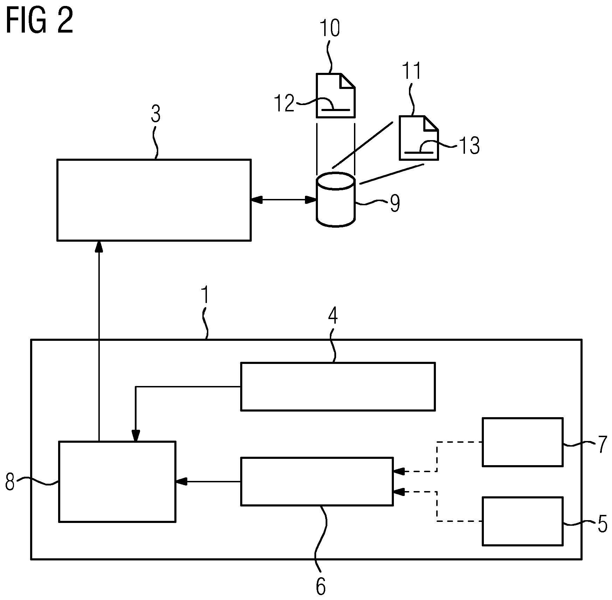

Für die Orchestrierung der Arbeitslasten des Clusters 2 dient eine zentrale Cluster-Management-Einheit 3, die nur in der ebenfalls rein schematischen FIG 2 dargestellt ist. Die zentrale Cluster-Management-Einheit 3 ist für das Verteilen von Arbeitslasten auf die Knoten 1 des Clusters 2, also (u.a.) auf die Automatisierungsgeräte 1 zuständig. Die zentrale Cluster-Management-Einheit 3 ist vorliegend eine rein funktionale Einheit, die bei dem hier beschriebenen Beispiel durch eine Software, konkret Kubernetes gegeben ist. In dieser können Knoten 2 und Arbeitslasten mit Knoten-Kennern/Knoten-IDs 4 (siehe FIG 2) in Form von sogenannten "Labeln" versehen werden, die eine selektive Zuordnung von Arbeitslasten zu Arbeitern ermöglichen. Selbstverständlich kann alternativ zu Kubernetes auch andere Orchestrierungs-Software als eine zentrale Cluster-Management-Einheit 3 zum Einsatz kommen.

Die Automatisierungsgeräte 1 können beispielsweise im Rahmen eines von der zentrale Cluster-Management-Einheit 3 abgewickelten Onboarding-Prozesses in den Cluster 2 aufgenommen werden. Die Knoten-Kenner 4 können dann im Rahmen des Onboarding-Prozesse oder im Anschluss an diesen zugeordnet werden bzw. worden sein.

Auf die zugeordneten Knoten-Kenner bzw. Cluster-Label 4 kann beim Zuordnen von funktionsspezifischen Arbeitslasten gefiltert werden, um eine bestimmte Container-Funktion nur einem einzelnen oder auch einem Satz von Knoten/Nodes/Industrial Edge Geräten 1 zuzuweisen. Gemäß dem Stand der Technik liegt das Zuweisen solcher Label 4 an Knoten/Nodes/Edge Geräte 1 dabei rein im Ausführungsbereich des Anwenders, hat konkret manuell zu erfolgen.

Jedes der vier Automatisierungsgeräte 1 umfasst weiterhin eine Selbsttaufe-Einheit 5, die dazu ausgebildet und/oder eingerichtet ist, eine dezentralen Selbsttaufe des jeweiligen Gerätes 1 unter Zuhilfenahme des Domain Name Systems abzuwickeln, wie sie in WO 2020/035308 A1 beschrieben ist. Über die Selbsttaufe bzw. das Selbsttaufe-Verfahren wird dem jeweiligen Gerät 1 ein Automatisierungs-Kenner 6 zugeordnet, bei dem es sich beispielsweise um einen vollständig qualifizierten Domain Namen (FQDN) handeln kann.

Alternativ oder zusätzlich dazu, dass das Gerät 1 den Automatisierungs-Kenner 6 über ein Selbsttaufe-Verfahren erhält, kann auch vorgesehen sein, dass ihm dieser von einem anderen Automatisierungsgerät, etwa einer Steuerung zugewiesen wird, oder dieser über ein Einrichtungs-Werkzeug zugeordnet wird, beispielsweise in Form eines sogenannten Name of Station (NoS) 7. Als Beispiel für ein solches Einrichtungs-Werkzeug sei das PROFINET-Primary-Setup-Tool genannt. In der FIG 2 sind beide Möglichkeiten, die in der Regel Alternativen darstellen, angedeutet, konkret dadurch, dass sowohl von der Selbsttaufe-Einheit 5 als auch dem NoS 7 jeweils ein gestrichelter Pfeil zu dem den Automatisierungs-Kenner 6 repräsentierenden Blockelement dargestellt sind.

Bei dem Automatisierungs-Kenner 6 handelt es sich entsprechend um einen Kenner, insbesondere Namen, der dem jeweiligen Gerät 1 anhand bzw. im Rahmen von aus dem Bereich der industriellen Automatisierungstechnik etablierten Kennzeichensysteme vergeben wurde.

Insbesondere, um etwa bei einer Erstinbetriebnahme eines einen Cluster-Knoten darstellenden Automatisierungsgerätes 1 oder einem Austausch eines solchen sicherzustellen, dass gerätespezifische bzw. "ortsabhängige" Automatisierungs-, etwa Produktionsfunktionen zu dem jeweiligen Automatisierungsgerät 1 anhand der etablierter Kennzeichnungssysteme zugeordnet werden können, weist jedes der Automatisierungsgeräte 1 ferner eine Geräte-Management-Einheit 8 auf.

Diese überwacht im Anschluss an die Bereitstellung des jeweiligen Gerätes 1, etwa dessen Anschluss an das Automatisierungsnetzwerk und dessen Einschalten (Schritt a)) im Betrieb des jeweiligen Gerätes 1, ob diesem ein Automatisierungs-Kenner 6 (Länge ungleich null) zugeordnet wird, der sich von dem Knoten-Kenner 4 unterscheidet (Schritt b)). Durch diese Überwachung wird sowohl ein erstmaliges Zuordnen eines Automatisierungs-Kenners 6 erfasst als auch der Fall, dass sich ein Automatisierungs-Kenner 6 ändert, also bereits zuvor ein Automatisierungs-Kenner 6 zugeordnet wurde und anschließend ein neuer Automatisierungs-Kenner 6 zugeordnet wird.

Wenn die Geräte-Management-Einheit 8 eine solche Zuordnung erkannt hat, fragt sie bei der zentralen Cluster-Management-Einheit 3 an, ob in einer zu dem Cluster 2 gehörigen Cluster-Zustands-Datenbank 9 mit Beschreibungsobjekten 10, 11 für Knoten 1 des Clusters 2 bereits ein Beschreibungsobjekt 10, 11 existiert, in dem der dem Automatisierungsgerät 1 zugeordnete Automatisierungs-Kenner 6 hinterlegt ist (Schritt c)).

Zu beachten ist, dass sich bei einem Gerätetausch der Knoten-Kenner 4 vom ursprünglichen (nun defekten Gerät 1) unterscheiden wird.

Bei den Beschreibungsobjekten 10, 11 in der Cluster-Zustands-Datenbank 9 handelt es sich um solche, die die gewünschten und aktuellen Zustände der Knoten 1 im Cluster 2 beschreiben.

In dem Fall, dass ein solches Beschreibungsobjekt 10, 11, also ein Beschreibungsobjekt 10,11, in welchem der zugeordneten Automatisierungs-Kenner 6 insbesondere in Form eines Labels 12, 13 hinterlegt ist, bereits für den dem Automatisierungsgerät 1 zugeordneten Knoten-Kenner 4 existiert, und dieses Beschreibungsobjekt als aktiv deklariert ist, wird dieses Beschreibungsobjekt 10, 11 als Beschreibungsobjekt 10, 11 des Automatisierungsgerätes 1 erachtet.

In dem Fall, dass noch kein solches Beschreibungsobjekt 10, 11 existiert oder in dem Fall, dass ein solches Beschreibungsobjekt 10, 11 für einen anderen als den dem Automatisierungsgerät 1 zugeordneten Knoten-Kenner 4 existiert und als inaktiv deklariert ist, erzeugt die Geräte-Management-Einheit 8 in der Cluster-Zustands-Datenbank 9 für den dem Automatisierungsgerät 1 zugeordneten Knoten-Kenner 4 ein Beschreibungsobjekt 10, 11, in dem der dem Automatisierungsgerät 1 zugeordnete Automatisierungs-Kenner 6 hinterlegt ist, oder hinterlegt den dem Automatisierungsgerät 1 zugeordneten Automatisierungs-Kenner 6 in einem in der Cluster-Zustands-Datenbank 9 bereits für den dem Automatisierungsgerät 1 zugeordneten Knoten-Kenner 4 existierenden Beschreibungsobjekt 10, 11 oder veranlasst die Hinterlegung oder die Erzeugung.

Die Geräte-Management-Einheit 8 kann beispielsweise der zentralen Cluster-Management-Einheit 3 den Automatisierungs-Kenner 6 übergeben und diese dazu veranlassen, diesen in einem existierenden Beschreibungsobjekt 10, 11 zu hinterlegen bzw. ein neues Beschreibungsobjekt 10, 11 mit diesem zu erzeugen (Schritt d)).

Der Automatisierungs-Kenner 6 wird dabei in dem Beschreibungsobjekt 10, 11 als Bestandteil eines Labels 12, 13 hinterlegt. Das bedeutet, das in der Datenbank 9 in dem Objekt 10, 11 hinterlegte Label 12, 13 umfasst den Automatisierungs-Kenner 6 und kann auch als Automatisierungs-Label 12, 13 aufgefasst bzw. bezeichnet werden. Dies gilt sowohl für den Fall, dass ein neues Beschreibungsobjekt 10, 11 erzeugt wird, in dem der Automatisierungs-Kenner 5 hinterlegt ist bzw. wird, als auch für den Fall dass die Hinterlegung in einem existierenden Beschreibungsobjekt 10, 11 erfolgt.

Bei dem in FIG 2 skizzierten Beispiel existiert bereits ein "altes" Beschreibungsobjekt 10, das als "inaktiv" deklariert ist und ein "altes" Label 12 umfasst, und es wird ein "neues" Beschreibungsobjekt 11 mit "neuem", den Automatisierungs-Kenner 6 umfassenden Label 13 erzeugt.

Für einen solchen Fall, also wenn ein altes als "inaktiv" deklariertes Beschreibungsobjekt 10 gefunden wurde, wird aus diesem bevorzugt das Label 12 entfernt. Auch ist es möglich, das alte, "inaktive" Beschreibungsobjekt 10 vollständig zu entfernen. So wird die Datenbank von Einträgen defekter Geräte automatisch bereinigt und aktuell gehalten.

Die Label 12, 13 haben bevorzugt die Form Schlüssel=Wert. Der Schlüssel kann beispielsweise die Struktur "siemens.edge/name" haben und der Wert des (alten oder neuen) Automatisierungs-Kenners 6, etwa FQDNs.

Dabei ermittelt die Geräte-Management-Einheit 8 lokal den dem Automatisierungsgerät 1 zugeordneten Knoten-Kenner 4 und adressiert in Schritt d) das zu erzeugende Beschreibungsobjekt 11 (oder das existierende Beschreibungsobjekt 10), in dem der Automatisierungs-Kenner 6 zu hinterlegen ist, über den dem Automatisierungsgerät 1 zugeordneten, lokal ermittelten Knoten-Kenner 4. Die lokale Ermittlung des Knoten-Kenners 4 kann beispielsweise erfolgen, indem die Geräte-Management-Einheit 8 diesen lokal abfragt. Dies kann beispielsweise über einen REST- oder RPC-Aufruf über HTTPS erfolgen.

Dem Automatisierungsgerät 1 wird dann unter Rückgriff auf das Beschreibungsobjekt 11, das in Schritt d) erzeugt wurde (bzw. in dem in Schritt d) der Automatisierungs-Kenner 6 hinterlegt wurde), wenigstens eine containerisierte Automatisierungs-funktion zugeordnet, konkret wenigsten eine Arbeitslast in Form einer durch einen Software-Container gegebenen Automatisierungsfunktion.

Nachfolgend können dann vorbekannte Orchestrierungsmechanismen, insbesondere der zentralen Cluster-Management-Einheit 3 (vorliegend Kubernetes) die dem Automatisierungsgerät 1 vom Anwender spezifisch per Automatisierungs-Kenner 6 und somit Label 13 zugeordneten Arbeitslasten in Form von Containern zugewiesen werden und darauf folgende Download- und Deployment-Prozesse wie gewohnt ablaufen.

Im Ergebnis wird die automatisierungstechnische Besonderheit abgebildet, dass Automatisierungsgeräte 1 etwa in einem Produktionsnetz nicht immer beliebig untereinander austauschbare Geräte 1 darstellen, sondern diese (auch) automatisierungs-, etwa produktionsspezifische Aufgaben erfüllen müssen, die durch andere Automatisierungsgeräte 1 und/oder an anderer Stelle nicht erbracht werden können. Dabei wird dies zuverlässig gewährleistet, ohne dass es eines manuellen Eingriffes, etwa eines manuellen Labelns bzw. einer manuellen Konfiguration durch einen Benutzer bedarf.

Durch die Geräte-Management-Einheit 8 werden zumindest die folgenden vier Fälle abgedeckt:
1. Neu-Gerät: für ein neues Gerät 1, das zuvor in den Cluster per "onboarding" aufgenommen wurde und dabei einen eigene Knoten-Kenner 4 erhalten hat, wird, nachdem es auch seinen Automatisierungs-Kenner 6 erhalten hat (beispielsweise als NoS 7 oder von der Selbsttaufe-Einheit 5) erstmalig dessen Automatisierungs-Kenner6 in dem Beschreibungsobjekt 11 als bzw. Bestandteil des Automatisierungs-Label 13 hinterlegt.
2. Änderung des Automatisierungs-Kenners 6: hierbei wird das Label 12, 13 im Beschreibungsobjekt 10, 11 aktualisiert (um den dann neuen, geänderten Automatisierungs-Kenner 6), unter Berücksichtigung des Fehlerfalls, dass der neue Automatisierungs-Kenner 6 bereits vergeben wurde.
3. Geräte-Tausch: hierbei wird das "alte" Beschreibungsobjekt 10 des alten, defekten Gerätes 1 anhand des Automatisierungs-Kenners 6 des Austausch-Geräts 1 ermittelt und geprüft, ob das zugehörige Beschreibungsobjekt insbesondere von der zentralen Cluster-Management-Einheit 3 bereits als "inaktiv" (also "defekt" bzw. "ausgefallen") markiert wurde. Ist dies der Fall, dann kann der Automatisierungs-Kenner 6 des neuen (Austausch-)Gerätes 1 als Automatisierungs-Label 13 im neuen Beschreibungsobjekt 11 hinterlegt werden.
4. Geräte-Dublette: hierbei existiert ein Beschreibungsobjekt 10 ("alt") eines bereits vorhandenen Gerätes 1 mit dem Automatisierungs-Kenner 6 im Label 12. Zudem ist dieses "alte" Beschreibungsobjekt 10 von der zentralen Cluster-Management-Einheit 3 als "aktiv" ("alive") ausgewiesen. In diesem Fall wird der Automatisierungs-Kenner 6 nicht übertragen, also weder vom "alten" Beschreibungsobjekt 10 entfernt, noch auf das Beschreibungsobjekt der Geräte-Dublette übertragen.

Für den Fall, dass dem Automatisierungsgerät 1 bereits (wenigstens einmal) ein Automatisierungs-Kenner 6 zugeordnet wurde (vorheriger/"alter" Kenner) und dann ein weiterer Automatisierungs-Kenner 6 zugeordnet wird ("neuer" Kenner), kann vorgesehen sein, dass die Geräte-Management-Einheit 8, nachdem sie die Zuordnung des weiteren Automatisierungs-Kenners 6 erkannt hat, die zentrale Cluster-Management-Einheit 3 kontaktiert und veranlasst, dass das (vorherige) Beschreibungsobjekt 10, in dem der vorherige Automatisierungs-Kenner 6 insbesondere als Label 12 hinterlegt ist, gelöscht wird. So kann die Datenbank 9 "aufgeräumt" bzw. aktuell gehalten werden.

Es sei angemerkt, dass für den Fall, dass die Anfrage, ob in der zu dem Cluster 2 gehörigen Cluster-Zustands-Datenbank 9 bereits für einen anderen als den dem Automatisierungsgerät 1 zugeordneten Knoten-Kenner 4 ein Beschreibungsobjekt 10, 11 existiert, in dem der dem Automatisierungsgerät 1 zugeordnete Automatisierungs-Kenner 6 hinterlegt ist, ergibt, dass dem so ist und dieses Beschreibungsobjekt 10, 11 als aktiv deklariert ist, die Geräte-Management-Einheit 8 kein Beschreibungsobjekt 10, 11 mit dem Automatisierungs-Kenner 6 in der Cluster-Zustands-Datenbank 9 für den dem Automatisierungsgerät 1 zugeordneten Knoten-Kenner 4 erzeugt, und den dem Automatisierungsgerät 1 zugeordneten Automatisierungs-Kenner 6 auch nicht in einem in der Cluster-Zustands-Datenbank 9 bereits für den dem Automatisierungsgerät 1 zugeordneten Knoten-Kenner 4 existierenden Beschreibungsobjekt 10,11 hinterlegt und die Hinterlegung oder die Erzeugung auch nicht veranlasst. Dies vermeidet zuverlässig eine "Doppelbelegung" bzw. "Doppelnutzung".

Weiterhin sei angemerkt, dass die vier in FIG 1 beispielhaft dargestellten Automatisierungsgeräte 1 allesamt Ausführungsbeispiele erfindungsgemäßer Automatisierungsgeräte darstellten, die ausgebildet und/oder eingerichtet sind, die vorstehend beschriebenen Schritte eines Ausführungsbeispiels des erfindungsgemäßen Verfahrens durchzuführen. Die vorstehend bespielhaft für ein Automatisierungsgerät 1 beschriebenen Abläufe gelten gleichermaßen für alle in FIG 1 dargestellten Automatisierungsgeräte 1.

Das industrielle Netzwerk gemäß FIG 1 ist ferner ein Ausführungsbeispiel eines erfindungsgemäßen Netzwerkes.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur automatischen Konfiguration eines insbesondere industriellen Automatisierungsgerätes (1), umfassend die Schritte
a) ein Automatisierungsgerät (1), welches geeignet ist, als Knoten eines Clusters (2) zu fungieren und wenigstens eine Automatisierungsaufgabe auszuführen, wird bereitgestellt,
b) eine Geräte-Management-Einheit (8) überwacht, ob dem Automatisierungsgerät (1) ein Automatisierungs-Kenner (6) zugeordnet wird,
c) wenn die Geräte-Management-Einheit (8) eine solche Zuordnung erkannt hat, fragt sie bei einer zentralen Cluster-Management-Einheit (3) an, ob in einer zu dem Cluster (2) gehörigen Cluster-Zustands-Datenbank (9) mit Beschreibungsobjekten (10, 11) für Knoten (1) des Clusters (2) bereits ein Beschreibungsobjekt (10, 11) existiert, in dem der dem Automatisierungsgerät zugeordnete Automatisierungs-Kenner (6) hinterlegt ist,
**dadurch gekennzeichnet, dass**
d) in dem Fall, dass ein solches Beschreibungsobjekt bereits für einen dem Automatisierungsgerät (1) zugeordneten Knoten-Kenner (4) existiert, dieses Beschreibungsobjekt als Beschreibungsobjekt des Automatisierungsgerätes (1) erachtet wird, und in dem Fall, dass ein solches Beschreibungsobjekt (10, 11) für einen anderen als den dem Automatisierungsgerät (1) zugeordneten Knoten-Kenner (4) existiert und als inaktiv deklariert ist und in dem Fall, dass noch kein solches Beschreibungsobjekt (10, 11) existiert, die Geräte-Management-Einheit (8) in der Cluster-Zustands-Datenbank (9) für den dem Automatisierungsgerät (1) zugeordneten Knoten-Kenner (4) ein Beschreibungsobjekt (10, 11) erzeugt, in dem der dem Automatisierungsgerät (1) zugeordnete Automatisierungs-Kenner (6) hinterlegt ist, oder den dem Automatisierungsgerät (1) zugeordneten Automatisierungs-Kenner (6) in einem in der Cluster-Zustands-Datenbank (9) bereits für einen dem Automatisierungsgerät (1) zugeordneten Knoten-Kenner (4) existierenden Beschreibungsobjekt (10, 11) hinterlegt oder die Hinterlegung oder die Erzeugung veranlasst.

2. Verfahren nach Anspruch 1,
**dadurch gekennzeichnet, dass**
dem Automatisierungsgerät (1) unter Rückgriff auf das Beschreibungsobjekt (10, 11), das in Schritt d) als das Beschreibungsobjekt (10, 11) des Automatisierungsgerätes (1) erachtet wurde oder das in Schritt d) erzeugt wurde oder in dem in Schritt d) der Automatisierungs-Kenner (6) hinterlegt wurde, wenigstens eine Automatisierungsfunktion zugeordnet wird.

3. Verfahren nach Anspruch 2,
**dadurch gekennzeichnet, dass**
dem Automatisierungsgerät (1) unter Rückgriff auf das Beschreibungsobjekt (10, 11) wenigstens eine containerisierte Automatisierungsfunktion zugeordnet wird.

4. Verfahren nach einem der vorhergehenden Ansprüche,
**dadurch gekennzeichnet, dass**
für den Fall, dass die Anfrage, ob in der zu dem Cluster (2) gehörigen Cluster-Zustands-Datenbank (9) bereits ein Beschreibungsobjekt (10, 11) existiert, in dem der dem Automatisierungsgerät (1) zugeordnete Automatisierungs-Kenner (6) hinterlegt ist, ergibt, dass dem so ist und dieses Beschreibungsobjekt (10, 11) als aktiv deklariert ist, die Geräte-Management-Einheit (8) kein Beschreibungsobjekt (10, 11), in dem der dem Automatisierungsgerät (1) zugeordnete Automatisierungs-Kenner (6) hinterlegt ist, in der Cluster-Zustands-Datenbank (9) für einen dem Automatisierungsgerät (1) zugeordneten Knoten-Kenner (4) erzeugt, und den dem Automatisierungsgerät(1) zugeordneten Automatisierungs-Kenner (6) auch nicht in einem in der Cluster-Zustands-Datenbank (9) bereits für einen dem Automatisierungsgerät (1) zugeordneten Knoten-Kenner (4) existierenden Beschreibungsobjekt (10, 11) hinterlegt und die Hinterlegung oder die Erzeugung auch nicht veranlasst.

5. Verfahren nach einem der vorhergehenden Ansprüche,
**dadurch gekennzeichnet, dass**
dem Automatisierungsgerät (1) ein weiterer Automatisierungs-Kenner (6) zugeordnet wird, und die Geräte-Management-Einheit (8), nachdem sie die Zuordnung des Weiteren Automatisierungs-Kenners (6) erkannt hat, die zentrale Cluster-Management-Einheit (3) kontaktiert und veranlasst, dass das Beschreibungsobjekt (10, 11), in dem der vorherige Automatisierungs-Kenner (16) hinterlegt ist, gelöscht wird.

6. Verfahren nach einem der vorhergehenden Ansprüche,
**dadurch gekennzeichnet, dass**
die Geräte-Management-Einheit (8) lokal einen dem Automatisierungsgerät (1) zugeordneten Knoten-Kenner (4) ermittelt, und/oder die Geräte-Management-Einheit (8) in Schritt d) das für den dem Automatisierungsgerät (1) zugeordneten Knoten-Kenner (4) bereits existierende Beschreibungsobjekt (10, 11) oder das zu erzeugende Beschreibungsobjekt (10, 11) oder das existierende Beschreibungsobjekt (10, 11), in dem der Automatisierungs-Kenner (6) zu hinterlegen ist, über einen dem Automatisierungsgerät (1) zugeordneten Knoten-Kenner (4) adressiert.

7. Verfahren nach einem der vorhergehenden Ansprüche,
**dadurch gekennzeichnet, dass**
der Automatisierungs-Kenner (6) in dem Beschreibungsobjekt (10, 11) in Form eines oder als Bestandteil eines Labels (12, 13) hinterlegt wird.

8. Verfahren nach einem der vorhergehenden Ansprüche,
**dadurch gekennzeichnet, dass**
dem Automatisierungsgerät (1) der Automatisierungs-Kenner (6) von einem weiteren Automatisierungsgerät, insbesondere einer Steuerung zugeordnet wird, und/oder dem Automatisierungsgerät (1) der Automatisierungs-Kenner (6) über ein Selbsttaufe-Verfahren zugeordnet wird, und/oder dem Automatisierungsgerät (1) der Automatisierungs-Kenner (6) über ein Einrichtungs-Werkzeug zugeordnet wird.

9. Verfahren nach einem der vorhergehenden Ansprüche,
**dadurch gekennzeichnet, dass**
dem Automatisierungsgerät (1) ein teilweise oder vollständig qualifizierter Domain Name als Automatisierungs-Kenner (6) zugeordnet wird, und/oder dem Automatisierungsgerät (1) ein Knoten-Kenner (4) von der zentralen Cluster-Management-Einheit (3) zugeordnet wird und/oder dem Automatisierungsgerät (1) eine Knoten-ID als Knoten-Kenner (4) zugordnet wird.

10. Verfahren nach einem der vorhergehenden Ansprüche,
**dadurch gekennzeichnet, dass**
in Schritt c) die erstmalige Zuordnung eines Automatisierungs-Kenners (6) erkannt wird, oder in Schritt c) die Zuordnung eines neuen, von einem dem Automatisierungsgerät (1) zuvor zugeordneten, alten Automatisierungs-Kenner (6) verschiedenen Automatisierungs-Kenners (6) erkannt wird.

11. Verfahren nach einem der vorhergehenden Ansprüche,
**dadurch gekennzeichnet, dass**
das Automatisierungsgerät (1) in Schritt a) als Neugerät bereitgestellt wird, und das Automatisierungsgerät (1) im Rahmen eines Onboarding-Prozesses in den Cluster (2) aufgenommen wird, insbesondere von der zentralen Cluster-Management-Einheit (3), und dem Automatisierungsgerät (1) ein Knoten-Kenner (4) im Rahmen des Onboarding-Prozesse oder im Anschluss an diesen der Knoten-Kenner (4) zugewiesen wird.

12. Verfahren nach einem der vorhergehenden Ansprüche,
**dadurch gekennzeichnet, dass**
in Schritt c) bei einer zentralen Cluster-Management-Einheit (3) angefragt wird, die für das Verteilen von Arbeitslasten auf die Knoten (1) des Clusters (2) zuständig ist.

13. Automatisierungsgerät (1) zur Durchführung eines Verfahrens nach einem der Ansprüche 1 bis 12,
wobei das Automatisierungsgerät (1) dazu ausgebildet und/oder eingerichtet ist, einen Knoten-Kenner (4) zugeordnet zu bekommen, und eine Geräte-Management-Einheit (8) umfasst, die dazu ausgebildet und/oder eingerichtet ist, zu überwachen, ob dem Automatisierungsgerät (1) ein Automatisierungs-Kenner (6) zugeordnet wird, und für den Fall, dass die Zuordnung eines solche erkannt wird, bei einer zentralen Cluster-Management-Einheit (3) anzufragen, ob in einer zu dem Cluster (2), an welchem das Gerät (1) als Knoten teilnimmt bzw. teilnehmen soll gehörigen Cluster-Zustands-Datenbank (9) mit Beschreibungsobjekten (10, 11) für Knoten des Clusters (2) bereits ein den in Schritt c) zugeordneten Automatisierungs-Kenner (6) umfassendes Beschreibungsobjekt (10, 11) existiert, gegebenenfalls für einen anderen als einen dem Automatisierungsgerät (1) zugeordneten Knoten-Kenner (4), und in dem Fall, dass noch kein solches Beschreibungsobjekt (10, 11) existiert oder in dem Fall, dass ein solches Beschreibungsobjekt (10, 11) existiert, dieses jedoch als inaktiv deklariert ist, ein den Automatisierungs-Kenner (6) umfassendes Beschreibungsobjekt (10, 11) für einen dem Automatisierungsgerät (1) zugeordneten Knoten-Kenner (4) in der Cluster-Zustands-Datenbank (9) zu erzeugen oder den Automatisierungs-Kenner (6) in einem in der Datenbank (9) bereits für einen dem Automatisierungsgerät (1) zugeordneten Knoten-Kenner (4) existierenden Beschreibungsobjekt (10, 11) zu hinterlegen.

14. Automatisierungsgerät (1) nach Anspruch 13,
wobei das Automatisierungsgerät (1) dazu ausgebildet und/oder eingerichtet ist, unter Rückgriff auf ein in einer zu dem Cluster (2), an welchem das Gerät (1) als Knoten teilnimmt bzw. teilnehmen soll gehörigen Cluster-Zustands-Datenbank (9) hinterlegten Beschreibungsobjektes (10, 11) wenigstens eine insbesondere containerisierte Automatisierungsfunktion zugeordnet zu bekommen.

15. Computerprogramm umfassend Programmcode-Mittel zur Durchführung des Verfahrens nach einem der Ansprüche 1 bis 12.

16. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 12 durchzuführen.

## Claims

1. Method for automatically configuring an in particular industrial automation device (1), comprising the following steps
a) an automation device (1) that is suitable for functioning as a node of a cluster (2) and for executing at least one automation task is provided,
b) a device management unit (8) monitors whether an automation identifier (6) is allocated to the automation device (1),
c) when the device management unit (8) has identified such allocation, it asks a central cluster management unit (3) whether a description object (10, 11) already exists in a cluster state database (9) associated with the cluster (2) and containing description objects (10, 11) for nodes (1) of the cluster (2), which description object stores the automation identifier (6) allocated to the automation device,
**characterized in that**
d) in the event that such a description object already exists for a node identifier (4) allocated to the automation device (1), this description object is considered to be a description object of the automation device (1), and in the event that such a description object (10, 11) exists for a node identifier (4) other than the one allocated to the automation device (1) and is declared as inactive and in the event that no such description object (10, 11) yet exists, the device management unit (8) generates a description object (10, 11) in the cluster state database (9) for the node identifier (4) allocated to the automation device (1), which description object stores the automation identifier (6) allocated to the automation device (1), or stores the automation identifier (6) allocated to the automation device (1) in a description object (10, 11) that already exists for a node identifier (4) allocated to the automation device (1) in the cluster state database (9) or initiates the storage or the generation.

2. Method according to Claim 1,
**characterized in that**
at least one automation function is allocated to the automation device (1) with recourse to the description object (10, 11) that was considered to be the description object (10, 11) of the automation device (1) in step d) or that was generated in step d) or in which the automation identifier (6) was stored in step d).

3. Method according to Claim 2,
**characterized in that**
at least one containerized automation function is allocated to the automation device (1) with recourse to the description object (10, 11).

4. Method according to one of the preceding claims,
**characterized in that**,
in the event that the request as to whether a description object (10, 11) already exists in the cluster state database (9) associated with the cluster (2), this description object storing the automation identifier (6) allocated to the automation device (1), reveals that this is the case and this description object (10, 11) is declared as active, the device management unit (8) does not generate any description object (10, 11) storing the automation identifier (6) allocated to the automation device (1) in the cluster state database (9) for a node identifier (4) allocated to the automation device (1), and also does not store the automation identifier (6) allocated to the automation device (1) in a description object (10, 11) that already exists for a node identifier (4) allocated to the automation device (1) in the cluster state database (9) and also does not initiate the storage or the generation.

5. Method according to one of the preceding claims,
**characterized in that**
the automation device (1) is allocated a further automation identifier (6), and the device management unit (8), after it has identified the allocation of the further automation identifier (6), contacts the central cluster management unit (3) and prompts erasure of the description object (10, 11) storing the previous automation identifier (16).

6. Method according to one of the preceding claims,
**characterized in that**
the device management unit (8) locally determines a node identifier (4) allocated to the automation device (1), and/or the device management unit (8), in step d), addresses the description object (10, 11) that already exists for the node identifier (4) allocated to the automation device (1) or the description object (10, 11) to be generated or the existing description object (10, 11) in which the automation identifier (6) is to be stored via a node identifier (4) allocated to the automation device (1).

7. Method according to one of the preceding claims,
**characterized in that**
the automation identifier (6) is stored in the description object (10, 11) in the form of an or as part of a label (12, 13) .

8. Method according to one of the preceding claims,
**characterized in that**
the automation identifier (6) is allocated to the automation device (1) by a further automation device, in particular a controller, and/or the automation identifier (6) is allocated to the automation device (1) using a self-baptism method, and/or the automation identifier (6) is allocated to the automation device (1) using a setup tool.

9. Method according to one of the preceding claims,
**characterized in that**
a partially or fully qualified domain name is allocated to the automation device (1) as automation identifier (6), and/or a node identifier (4) is allocated to the automation device (1) by the central cluster management unit (3), and/or a node ID is allocated to the automation device (1) as node identifier (4) .

10. Method according to one of the preceding claims,
**characterized in that**,
in step c), the initial allocation of an automation identifier (6) is identified, or, in step c), the allocation of a new automation identifier (6) different from an old automation identifier (6) previously allocated to the automation device (1) is identified.

11. Method according to one of the preceding claims,
**characterized in that**,
in step a), the automation device (1) is provided as a new device and the automation device (1) is incorporated into the cluster (2) in the course of an on-boarding process, in particular by the central cluster management unit (3), and a node identifier (4) is assigned to the automation device (1) in the course of the on-boarding process, or the node identifier (4) is assigned subsequently.

12. Method according to one of the preceding claims,
**characterized in that**,
in step c), a request is made to a central cluster management unit (3) that is responsible for distributing workloads among the nodes (1) of the cluster (2).

13. Automation device (1) for performing a method according to one of Claims 1 to 12,
wherein the automation device (1) is designed and/or configured to be allocated a node identifier (4), and comprises a device management unit (8) that is designed and/or configured to monitor whether an automation identifier (6) is allocated to the automation device (1) and, in the event that the allocation thereof is identified, to ask a central cluster management unit (3) whether a description object (10, 11) comprising the automation identifier (6) allocated in step c) already exists in a cluster state database (9) associated with the cluster (2) in which the device (1) participates or is intended to participate as node and containing description objects (10, 11) for nodes of the cluster (2), possibly for a node identifier (4) other than the one allocated to the automation device (1), and in the event that no such description object (10, 11) yet exists or in the event that such a description object (10, 11) exists but is declared as inactive, to generate a description object (10, 11) comprising the automation identifier (6) for a node identifier (4) allocated to the automation device (1) in the cluster state database (9) or to store the automation identifier (6) in a description object (10, 11) that already exists for a node identifier (4) allocated to the automation device (1) in the database (9)

14. Automation device (1) according to Claim 13,
wherein the automation device (1) is designed and/or configured to be allocated at least one in particular containerized automation function with recourse to a description object (10, 11) stored in a cluster state database (9) associated with the cluster (2) in which the device (1) participates or is intended to participate as node.

15. Computer program comprising program code means for performing the method according to one of Claims 1 to 12.

16. Computer-readable medium comprising instructions that, when executed on at least one computer, prompt the at least one computer to perform the steps of the method according to one of Claims 1 to 12.

## Revendications

1. Procédé de configuration automatique d'un appareil (1) d'automatisation, notamment industriel, comprenant les stades
a) on se procure un appareil (1) d'automatisation, qui est propre à servir de nœud d'une grappe (2) et qui effectue au moins une tâche d'automatisation,
b) on contrôle une unité (8) de gestion d'appareils sur le point de savoir si un identifiant (6) d'automatisation est affecté à l'appareil (1) d'automatisation,
c) si l'unité (8) de gestion d'appareils a reconnu une telle affectation, elle demande auprès d'une unité (3) centrale de gestion de grappe s'il existe dans une base (9) de données d'état de grappe, propre à la grappe (2) et ayant des objets (10, 11) de description de nœud (1) de la grappe (2), un objet (10, 11) de description, dans lequel l'identifiant (6) d'automatisation affecté à l'appareil d'automatisation est mis en mémoire,
**caractérisé en ce que**
d) dans le cas où un tel objet de description existe déjà pour un identifiant (4) de nœuds affecté à l'appareil (1) d'automatisation, on considère cet objet de description comme un objet de description de l'appareil (1) d'automatisation, et dans le cas où un tel objet (10, 11) de description existe pour un identifiant (4) de nœud affecté à un autre appareil que l'appareil (1) d'automatisation et est déclaré comme inactif, et dans le cas où il n'existe pas encore un tel objet (10, 11) de description, l'unité (8) de gestion d'appareils produit, dans la base (9) de données d'état de grappe, pour l'identifiant (4) de nœud affecté à l'appareil (1) d'automatisation, un objet (10, 11) de description, dans lequel l'identifiant (6) d'automatisation affecté à l'appareil (1) d'automatisation est mis en mémoire, ou met en mémoire l'identifiant (6) d'automatisation affecté à l'appareil (1) d'automatisation dans un objet (10, 11) de description existant déjà dans une base (9) de données d'état de grappe pour un identifiant (4) de nœud affecté à l'appareil (1) d'automatisation, ou provoque la mise en mémoire ou la production.

2. Procédé suivant la revendication 1,
**caractérisé en ce que**
l'on affecte au moins une fonction d'automatisation à l'appareil (1) d'automatisation en recourant à l'objet (10, 11) de description, qui a été considéré comme l'objet (10, 11) de description de l'appareil (1) d'automatisation dans le stade d) ou dans lequel au stade d) l'identifiant (6) d'automatisation a été mis en mémoire.

3. Procédé suivant la revendication 2,
**caractérisé en ce que**
l'on affecte au moins une fonction d'automatisation containérisée à l'appareil (1) d'automatisation en recourant à l'objet (10, 11) de description.

4. Procédé suivant l'une des revendications précédentes,
**caractérisé en ce que**
dans le cas où la demande du point de savoir s'il existe déjà dans la base (9) de données d'état de grappe propre à la grappe (2) un objet (10, 11) de description, dans lequel l'identifiant (6) d'automatisation affecté à l'appareil (1) d'automatisation et mis en mémoire, donne qu'il en est ainsi et que cet objet (10, 11) de description est déclaré comme actif, l'unité (8) de gestion d'appareils ne produit pas, dans la base (9) de données d'état de grappe pour un identifiant (4) de nœud affecté à l'appareil (1) d'automatisation, d'objet (10, 11) de description, dans lequel l'identifiant (6) d'automatisation affecté à l'appareil (1) d'automatisation est mis en mémoire, et ne met pas non plus en mémoire l'identifiant (6) d'automatisation affecté à l'appareil (1) d'automatisation dans un objet (10, 11) de description existant déjà dans la base (9) de données d'état de grappe pour un identifiant (4) de nœud affecté à l'appareil (1) d'automatisation et ne provoque pas non plus la mise en mémoire ou la production.

5. Procédé suivant l'une des revendications précédentes,
**caractérisé en ce que**
l'on affecte un autre identifiant (6) d'automatisation à l'appareil (1) d'automatisation, et l'unité (8) de gestion d'appareils, après qu'elle a détecté l'affectation de l'autre identifiant (6) d'automatisation, contacte l'unité (3) centrale de gestion de grappe et fait en sorte d'effacer l'objet (10, 11) de description, dans lequel l'identifiant (16) d'automatisation précédent est mis en mémoire.

6. Procédé suivant l'une des revendications précédentes,
**caractérisé en ce que**
l'unité (8) de gestion d'appareils détermine localement un identifiant (4) de nœud affecté à l'appareil (1) d'automatisation et/ou l'unité (8) de gestion d'appareil adresse, par l'intermédiaire d'un identifiant (4) de nœud affecté à l'appareil (1) d'automatisation, au stade d) l'objet (10, 11) de description existant déjà pour l'identifiant (4) de nœud affecté à l'appareil (1) d'automatisation, ou l'objet (10, 11) de description à produire ou l'objet (10, 11) de description existant, dans lequel l'identifiant (6) d'automatisation est mis en mémoire.

7. Procédé suivant l'une des revendications précédentes,
**caractérisé en ce que**
l'on met l'identifiant (6) d'automatisation dans l'objet (10, 11) de description sous la forme d'un ou sous la forme d'une partie constitutive d'un label (12, 13).

8. Procédé suivant l'une des revendications précédentes,
**caractérisé en ce que**
l'on affecte à l'appareil (1) d'automatisation l'identifiant (6) d'automatisation d'un autre appareil d'automatisation, notamment d'une commande et/ou **en ce que** l'on affecte à l'appareil (1) d'automatisation l'identifiant (6) d'automatisation par un procédé d'auto-baptême et/ou on affecte à l'appareil (1) d'automatisation l'identifiant (6) d'automatisation par un outil de création.

9. Procédé suivant l'une des revendications précédentes,
**caractérisé en ce que**
l'on affecte à l'appareil (1) d'automatisation un nom de domaine qualifié en tout ou partie comme identifiant (6) d'automatisation et/ou on affecte, par l'unité (3) centrale de gestion de grappe à l'appareil (1) d'automatisation, un identifiant (4) de nœud et/ou on affecte à l'appareil (1) d'automatisation une ID de nœud comme identifiant (4) de nœud.

10. Procédé suivant l'une des revendications précédentes,
**caractérisé en ce que**
l'on détecte au stade c) l'affectation pour la première fois d'un identifiant (6) d'automatisation, ou on détecte au stade c) l'affectation d'un nouveau identifiant (6) d'automatisation différent d'un ancien identifiant (6) d'automatisation affecté précédemment à l'appareil (1) d'automatisation.

11. Procédé suivant l'une des revendications précédentes,
**caractérisé en ce que**
l'on se procure l'appareil (1) d'automatisation au stade a) comme un nouvel appareil et on enregistre l'appareil (1) d'automatisation dans le cadre d'un processus on boarding dans la grappe (2), notamment par l'unité (3) centrale de gestion de grappe, et on attribue à l'appareil (1) d'automatisation un identifiant (4) de nœud dans le cadre du processus on boarding ou à la suite de celuici l'identifiant (4) de nœud.

12. Procédé suivant l'une des revendications précédentes,
**caractérisé en ce qu'**
au stade c), on demande auprès de l'unité (3) centrale de gestion de grappe, qui est compétente pour la répartition de charges de travail entre les nœuds (1) de la grappe (2).

13. Appareil (1) d'automatisation pour effectuer un procédé suivant l'une des revendications 1 à 12,
dans lequel l'appareil (1) d'automatisation est constitué et/ou conçu pour recevoir en affectation à un identifiant (4) de nœud et comprend une unité (8) de gestion d'appareils, qui est constituée et/ou conçue pour contrôler si un identifiant (6) d'automatisation est affecté à l'appareil (1) d'automatisation et, dans le cas où il est détecté une affectation de ce genre, pour demander à une unité (3) centrale de gestion de grappe, s'il existe déjà dans une base (9) de données d'état de grappe propre à la grappe (2), à laquelle l'appareil (1) participe en tant que nœud et ayant des objets (10, 11) de description des nœuds de la grappe (2), un objet (10, 11) de description comprenant l'identifiant (6) d'automatisation affecté au stade c), le cas échéant, pour un autre identifiant (4) de nœud affecté à l'appareil (1) d'automatisation, et dans le cas où il n'existe pas encore un tel objet (10, 11) de description, ou dans le cas où il existe un tel objet (10, 11) de description, mais celuici est déclaré comme inactif, pour produire, dans la base (9) de données d'état de grappe, un objet (10, 11) de description comprenant l'identifiant (6) d'automatisation, pour un identifiant (4) de nœud affecté à l'appareil (1) d'automatisation ou pour mettre en mémoire l'identifiant (6) d'automatisation dans un objet (10, 11) de description existant déjà dans la base (9) de données pour un identifiant (4) de nœud affecté à l'appareil (1) d'automatisation.

14. Appareil (1) d'automatisation suivant la revendication 13, dans lequel l'appareil (1) d'automatisation est constitué et/ou conçu pour recevoir, en recourant à un objet (10, 11) de description mis en mémoire dans une base (9) de données d'état de grappe appartenant à la grappe (2) dont doit faire partie que l'appareil (1) comme noeud, en affectation au moins une fonction d'automatisation, notamment containérisée.

15. Programme d'ordinateur comprenant des moyens de code de programme pour effectuer le procédé suivant l'une des revendications 1 à 12.

16. Support, déchiffrable par ordinateur, qui comprend des instructions qui, lorsqu'elles sont réalisées sur au moins un ordinateur, font que le au moins un ordinateur effectue les stades du procédé suivant l'une des revendications 1 à 12.
